(19) Europäisches Patentamt
European Patent Office
Office européen des brevets

(11) EP 3 012 125 B1

(12) **EUROPEAN PATENT SPECIFICATION**

(45) Date of publication and mention of the grant of the patent:
**16.12.2020 Bulletin 2020/51**

(51) Int Cl.:
***B60C 23/12*** *(2006.01)*

(21) Application number: **15189381.5**

(22) Date of filing: **12.10.2015**

(54) **AIR MAINTENANCE TIRE ASSEMBLY**

ANORDNUNG ZUM ERHALTEN DES LUFTDRUCKS IN REIFEN

ENSEMBLE DE MAINTENANCE A AIR D'UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2014 US 201414519176**

(43) Date of publication of application:
**27.04.2016 Bulletin 2016/17**

(73) Proprietor: **The Goodyear Tire & Rubber Company**
**Akron, Ohio 44316 (US)**

(72) Inventor: **LIN, Cheng-Hsiung**
**Hudson, OH Ohio 44236 (US)**

(74) Representative: **Kutsch, Bernd**
**Goodyear S.A.**
**Patent Department**
**Avenue Gordon Smith**
**7750 Colmar-Berg (LU)**

(56) References cited:
**US-A- 2 127 152**
**US-A- 2 317 636**
**US-A- 2 623 472**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The present invention generally relates to automotive and other vehicles, and more specifically, to a wheel for such a vehicle which includes a pump for automatically inflating a pneumatic tire mounted on the wheel.

### Background of the Invention

Low tire pressure is a major cause of excessive fuel consumption, tire wear, and impaired steerability. A typical pneumatic tire will leak about 25 percent of its pressure per year due to rubber's inherent permeability. It is thus good practice to check/maintain tire pressure on a regular basis.

However, even checking tire pressure every few weeks may not prevent these adverse affects when a slow leak is present, and the leak may go undetected unless a careful record is maintained of how frequently the pressure in each tire has to be replenished. A fast leak or flat condition may rapidly cause damage to the tire and even render it unusable in a short period of time even though this condition may go unnoticed by an inexperienced driver until it is too late.

It is thus desirable to have some mechanism that automatically replenishes the tire pressure when it is lower than its optimal amount. Conventional tire pumps may be mounted on vehicle wheels and utilize centrifugal force to automatically pump air from the atmosphere into a tire cavity and thereby maintain the tire pressure at a predetermined value.

These pumps may be two-stage pumps with a piston radially movable in a cylinder to draw air from the atmosphere into a primary chamber and pump air from a secondary chamber into the tire cavity when the piston is moved outward by centrifugal force resulting from movement of the vehicle and rotation of the wheels. The piston may be moved inward by a spring when the vehicle stops to transfer air from the primary chamber into the secondary chamber. In order to keep the mass of the piston and the force and size of the spring within practical limits, the piston and spring may be made small enough that the piston may begin to move outward in response to a small centrifugal force resulting from a low vehicle speed.

This causes a problem when the vehicle is operated at low speed in the rain, and/or on terrain including loose particulate matter such as dirt or sand. If the pump does not have an inlet filter, operation under such adverse conditions may cause contaminants to be drawn into the pump and clog the inlet and outlet valves and/or even be pumped into the tire. If the pump does have an inlet filter, the filter may become clogged. These conditions may render the pump inoperable.

Friction between the piston and the wall of the cylinder when the pump is operating also may cause wear and reduction of the service life of the pump. Since pneumatic tires typically leak slowly, an automatic tire pump may only be required to operate during a fraction of the time the vehicle is running to maintain the pressure at the optimal value. Conventional tire pumps may operate continuously, and are thereby subjected to more wear than is necessary.

Another conventional pump may be mounted to a vehicle's wheel and be powered by the wheel's motion during normal vehicle operation thereby maintaining an optimal tire inflation pressure. The pump may be a positive displacement, piston-type compressor wherein the piston responds to the centrifugal force generated by the wheel's rotation or to the vertical acceleration generated by the wheel's response to bumps in the road. The piston may be a small diameter, but may include an upper extension made of dense material. Thus, there may be sufficient mass responding to rotation or the motion from bumps to move the piston and create the necessary pressure for inflation. The piston may be returned by a spring once the forces acting upon the piston decline due to a slow vehicle speed, a smooth driving surface, or both.

The pump may include inlet and outlet check valves. The pump/inflator may be mounted to the wheel either within the tire cavity or external to the tire. If the centrifugal forces of rotation are to propel the piston, the axis of the cylinder may be oriented radially. If the pump is designed to be energized by the wheel's reaction to bumps in the road, it may be oriented tangential to a circle centered at the wheel axis. It may also have a double acting piston. Compression would then take place when the compressor would be approximately at 3:00 o'clock or 9:00 o'clock in its rotation with the wheel as a bump would be hit by the wheel.

For the case of centrifugal force for piston action, there may be one compression stroke for each excursion of automobile speed from stationary or some minimum speed up to the automobile speed which translates into adequate rotational speed to generate the needed piston force to create air flow into the tire cavity. For the case in which bumps in the road actuate the piston, the compression strokes may be more random than the bumps themselves since the strokes would only occur when the axis of the compressor would be aligned in its rotation to a direction more or less parallel with the wheel motion caused by the bump.

Pressure regulation may be provided by designing the pump's compression ratio to limit the delivery pressure to that desired to be the maximum tire inflation pressure. Compression ratio may be the ratio of cylinder volume at the start of a piston stroke to the volume remaining in the cylinder at the end of the piston's stroke. Compression ratio for a

given basic design may be set at the time of manufacture by either limiting the piston travel or by providing additional "dead" volume within the piston. One method for this may be to drill a hole in the bottom of the piston at the time of manufacture, the depth of the hole being set to obtain the desired pressure development.

When the pump is actuated by centrifugal force, the pump may work with the piston gradually progressing along the cylinder against the compressed charge of air in the cylinder as the vehicle accelerates and the wheel rotation rate increases. Once the charge of air exceeds the existing tire pressure plus the discharge valve cracking differential pressure, any increased vehicle speed causes additional stroke movement of the piston and discharge of the compressed air into the tire cavity. As the vehicle slows or stops, the piston return spring may have returned the piston to its location at the beginning of its stroke and the pumping process may begin again with new vehicle motion. With typical passenger car operation including many stops and starts, the pump may deliver a small charge of air each time the vehicle accelerates from a speed low enough to allow the piston return spring to return the piston to a speed high enough to force the piston to compress air and discharge compressed air into the tire cavity.

In order to maximize the force available for driving the piston to compress the air in the cylinder, the piston may have an enlarged end made of dense material. The enlarged end may be opposite the end of the piston that fits into the cylinder, with its diameter being larger than the piston diameter. The enlarged end may be constructed of brass, lead, and/or other high density material(s). This conventional pump may eliminate extra tire wear and fuel consumption caused by underinflated tires. Where only a small leak occurs, this pump may extend mileage before the tire becomes completely uninflated or flat.

US-A-2,317,636 describes a pumping assembly used with a pneumatic tire in accordance with the preamble of claim 1.

US-A-2,127,152 describes an air compressor that may be used as an attachment to a vehicle with the compressed air being used to aid in the propulsion of the vehicle.

US-A-2,623,472 describes a reversible pump comprising rotary cylinders. The pumps are mounted within a drive wheel of a vehicle.

## Summary of the Invention

The invention relates to a pumping assembly in accordance with claim 1.

Dependent claims refer to preferred embodiments of the invention.

A pumping assembly in accordance with the present invention keeps a pneumatic tire from becoming underinflated.

According to a preferred aspect of the pumping assembly, an outlet for directing pressurized air into a valve stem of the pneumatic tire is provided.

According to another preferred of the pumping assembly, a filter is disposed adjacent the outlet.

According to yet another preferred aspect of the pumping assembly, a filter is disposed adjacent the valve stem.

According to still another preferred aspect of the pumping assembly, an adjustable pressure control valve determines the pressure of air entering a tire cavity of the pneumatic tire.

According to yet another preferred aspect of the pumping assembly, the pumping assembly pumps pressurized air in a tire cavity of the pneumatic tire in either direction of rotation of the tire rim.

According to still another preferred aspect of the pumping assembly, four pumps are mounted at 90 degree increments about the tire rim.

According to yet another preferred aspect of the pumping assembly, each of the four pumps is connected in series with the other three pumps such that the pumping assembly produces an amplification effect wherein the outlet pressure of one pump becomes the inlet pressure of another pump.

According to still another preferred aspect of the pumping assembly, each of the four pumps has a single chamber and a single predetermined compression ratio.

According to yet another preferred aspect of the pumping assembly, the compression ratio of the pumping assembly is the predetermined compression ratio of each pump raised to the fourth power.

According to still another preferred aspect of the pumping assembly, each of the four pumps has two chambers and a single predetermined compression ratio for each chamber.

According to yet another preferred aspect of the pumping assembly, the compression ratio of the pumping assembly is the predetermined compression ratio of each chamber raised to the eighth power.

A method using the pumping assembly in accordance with the present invention maintains pressure within a pneumatic tire. The method includes the steps of: attaching an even number of pumps to a tire rim; producing a pumping action with a gravity mass; fixing a cam to the gravity mass for maintaining the cam in a fixed position relative to the gravity mass; interfacing the pumps and the cam with rollers, and rotating the tire rim and pumps such that the gravity mass and cam retards rotation of the cam as the tire rim rotates.

According to a preferred aspect of the method, it includes the step of directing pressurized air into a valve stem

of the pneumatic tire from a filter and outlet of the pumping action.

According to another preferred aspect of the method, it includes the step of determining the pressure of air entering a tire cavity of the pneumatic tire by an adjustable pressure control valve.

According to another preferred aspect of the method, it includes pumping pressurized air in a tire cavity of the pneumatic tire in either direction of rotation of the tire rim.

According to yet another preferred aspect of the method, it includes mounting four pumps 90 degree increments about the tire rim and connecting each of the four pumps in series with the other three pumps such that the pumps produce an amplification effect wherein the outlet pressure of one pump becomes the inlet pressure of another pump.

According to another preferred aspect of the method, each of the four pumps have a single chamber and a single predetermined compression ratio and the compression ratio of the four pumps combined is the predetermined compression ratio of each pump raised to the fourth power.

According to yet another preferred aspect of the method, each of the four pumps has two chambers and a single predetermined compression ratio for each chamber.

According to still another preferred aspect of the method, the compression ratio of the four pumps combined is the predetermined compression ratio of each chamber raised to the eighth power.

## Brief Description of the Drawings

The present invention will be described by way of example and with reference to the accompanying drawings, in which:

FIG. 1 schematically shows part of an example assembly in accordance with the present invention.
FIG. 2 schematically shows part of another example assembly in accordance with the present invention.
FIG. 3 schematically shows part of still another example assembly in accordance with the present invention.
FIG. 4 schematically shows yet another example assembly in accordance with the present invention.
FIG. 5 schematically shows the operation of the example assembly of FIG. 4.
FIG. 6 schematically shows an example cam for use with the example assembly of FIG. 4.
FIG. 7 schematically shows operation of part of the assembly FIG. 4.
FIG. 8 schematically demonstrates the functioning of an example assembly in accordance with the present invention.

## Detailed Description of Example Embodiments of the Present Invention

An assembly 100 in accordance with the present invention defines a multi-chamber on-wheel air maintenance tire (AMT) pump design for an external wheel mounting. The assembly 100 may provide a low profile and effective AMT pump system easily and externally mounted to a standard wheel without significant modification of to the standard wheel. Further, the assembly introduce no issue when mounting a conventional tire to the wheel.

The assembly 100 comprises an even number of pumps preferably evenly distributed about the interior outside surface of the wheel in order to obtain the low profile and a well-balanced wheel. Single chamber or double chamber pumps may be used at each of the evenly distributed pump positions. Multiple pumps, serially connected to each other, may be used to create an equivalent multi-chamber effect.

An unbalanced mass and an axially uniform cam are used to drive the pumps of the assembly 100. A relatively small roller may be used for pump/cam interaction. The unbalanced mass may be mounted with extra low friction bearings to ensure free rotation (low resistance) for the cam. Pumps and pump housings are fixed to, and rotate with, the wheel. The unbalanced mass may be maintained at a vertical position due to gravity and low bearing friction, regardless of any rotational position of the wheel. These elements define a stroke control multi-chamber pump system, such as the assembly 100.

Each chamber of each pump may represent one segment of the conventional vein system, such as set forth in US-B-8,113,254. A reservoir chamber may be added to the assembly 100 for absorbing rapid pressure losses to the tire cavity. An even number (e.g., 2, 4, 6, 8, etc.) of pumps and pump holders may be pre-assembled and placed evenly on a mounting plate that may then be assembled to the cam/unbalanced mass system described above. Mechanical or electronic control valve/pressure sensing may be used as a pressure/flow control unit. Pressure may be controlled at the ambient air inlet or pressurized outlet to the assembly 100. The air inlet may include a filter to prevent foreign items from being inlet to the pump system and blocking the pump system.

The outlet from the pump system may directly connect to a modified tire valve stem. This modified valve stem may retain its normal function (e.g., filling the tire cavity by air pump, deflating the tire for tire service, tire pressure measurement, etc.). The filter may alternatively be placed at the air outlet to the tire cavity. As with the conventional vein system, the assembly 100 may be independent of the direction of rotation of the tire. An adjustable pressure control valve may also easily fit into this assembly.

The low profile nature of the assembly 100 allows the assembly to be directly mounted bolt pattern of the wheel hub. The assembly 100 thereby does not interfere with tire mount/dismount and provides a simple installation for the assembly, such as after-market addition of the assembly to a vehicle. As described above, the assembly 100 may function bi-directionally, regardless of the direction of rotation of the wheel/tire. Further, the installation direction will have no effect on pumping performance.

The assembly 100 provides a relatively high compression ratio and a relatively high pumping capacity due to amplification effect of the serially mounted pumps. The pumping rate may be linear through most of pressure range of the assembly 100. Due to an amplification effect of the assembly 100, compression may be defined as:

$$R = (r)^n$$

where

R : assembly compression ratio
r : single chamber compression ratio
n : total number of chambers in the assembly

Therefore, a high compression ratio for each single chamber may not be required (e.g., low force or deformation required, etc.).

As the example assemblies of Figs. 1-3 show, the assembly 100 thus produces a staggered air pressure amplifier effect that may be used to overcome low pumping force created by gravity. Each chamber may represent two segments of vein system that generates small pressure differential (10 to 15 psi or 68950 to 103425 Pascal) for the next pump unit (e.g., staggered amplifier). This amplifier assembly 100 may generate 150 psi (1034250 Pascal) air from standard 90 psi (620550 Pascal) air source.

The assembly 100 may use a single piston for two chambers (not shown) or two, four (Fig. 4), six, eight, etc. single chamber pumps 150 for producing a controllable/dependent pressure differential between two chambers. The pump action may be based on displacement control (e.g., a cam 105 controlling stroke length). The source pressure of each chamber may be the chamber pressure of the previous chamber. The actuating mechanism of the pistons 155 may be a low resistance rotatable, unbalanced cam 105 with a rotating pump. A heavy mass 130 may be fixed relative to ground as the tire/wheel 107 rotates due to torque balance between the mass 130 and pump generated resistance (e.g., friction of pump rollers 160 and bearings). The assembly 100 may pump at lower efficiency as long as the unbalanced mass rotates at a speed different than the tire/wheel rotation.

Fig. 5 defines force distribution of the assembly 100. $F_1$, $F_2$, $F_3$, and $F_4$ may be generated by the chamber pressures of the pumps 150. If the mass m or 130 does not rotate with the tire/wheel 107 (e.g., $\Theta$ is a constant because lack of torque to move mass 130), $\omega = 0$ and $F_5 = mg(\cos \Theta)$. $Rmg(\sin \Theta) = r_b\mu F_5 + r_1\mu F_1 + r_2\mu F_2 + r_3\mu F_3 + r_4\mu F_4$, to obtain $\Theta$ where $-n/2 < \Theta < n/2$. If m rotates coincidentally with the tire/wheel 107, $\Theta$ is not constant and $F5 = mR\omega_2$, $r_b\mu F_5 + r_1\mu F_1 + r_2\mu F_2 + r_3\mu F_3 + r_4\mu F_4 > Rmg(\sin \Theta)$ for any $\Theta$, and, therefore, $r_b\mu F_5 + r_1\mu F_1 + r_2\mu F_2 + r_3\mu F_3 + r_4\mu F_4 > Rmg$.

The cam 105 may be designed for external on-wheel attachment by considering 0-180 degrees in any potential form. Based on required stroke length, equal distance from the cam 105 to the center at 0 degrees and 180 degrees (e.g. $R_{avg}$), 90 degrees may be as a maximum (or minimum) distance from the cam center (maximum or minimum radius, $R_{max}$ or $R_{min}$) as long as the slope at 0, 90, and 180 degrees is perpendicular to either axis x or y. Stroke Length may equal $2(R_{avg} - R_{min})$ or $2(R_{max} - R_{avg})$ based on the form selected to determine $R(\Theta)$, $0 \leq \Theta \leq 180$. The distance for 180 to 360 degrees may be based on $R(\Theta) = 2R_{avg} - R(\Theta - 180)$. For example, if Stroke Length = 8.5725 mm, $R_{avg}$ = 14.2875 mm (0.563") and Rmin = 10.00125 mm (0.394"). R may be defined as a half ellipse with long axis equal to $2R_{avg}$ and short axis equal to $2R_{min}$. Thus:

$$R(\Theta) = RavgRmin/\sqrt{}(R_{min}(\cos\Theta)^2 + R_{avg}(\sin\Theta)^2) \text{ when } 0 \leq \Theta \leq п$$

and

$$R(\Theta) = 2Ravg - R(\Theta - п) \text{ when } п \leq \Theta \leq 2п.$$

Fig. 6 shows an example 1.125" cam. In Fig. 7, four pistons 155 with rollers 160 contact the example cam 130. As a result, two pairs of pistons 155 act against the cam 130.

Based on one example miniature piston with double chambers, an Active Pump Volume may equal 271.5 $mm^3$.

Such an assembly 100 may have a pump rate of 2.92 psi (20133 Pa) per 100 miles (160.9 km), regardless of load. Wheel rotation direction may not affect pumping performance. A very small torque may be incurred at the pump rollers 160. If Fig. 8, an example torque is shown versus number of wheel rotations.

## Claims

**1.** A pumping assembly for use with a pneumatic tire mounted on a tire rim to keep the pneumatic tire from becoming underinflated, the pumping assembly (100) comprising:

an even number of pumps (150) attached to a tire rim;
a gravity mass (130);
a cam (105) fixed to the gravity mass (130) for producing a pumping action, the gravity mass (130) maintaining the cam (105) in a fixed position relative to the gravity mass (130) and retarding rotation of the cam (105) as the tire rotates; and
rollers (160) for engaging the cam (105) for producing the pumping action as the tire rim rotates;
**characterized in that** the pumps (150) are connected in series.

**2.** The pumping assembly as set forth in claim 1 further including an outlet for directing pressurized air into a valve stem of the pneumatic tire.

**3.** The pumping assembly as set forth in claim 2 further including a filter disposed adjacent the outlet or adjacent the valve stem.

**4.** The pumping assembly as set forth in at least one of the previous claims further including an adjustable pressure control valve for determining the pressure of air entering a tire cavity of the pneumatic tire.

**5.** The pumping assembly as set forth in at least one of the previous claims wherein the pumping assembly (100) is configured to pump pressurized air in a tire cavity of the pneumatic tire in either direction of rotation of the tire rim.

**6.** The pumping assembly as set forth in at least one of the previous claims four pumps (150) are mounted at 90 degree increments about the tire rim.

**7.** The pumping assembly as set forth in at least one of the previous claims each of the four pumps or the even number of pumps is connected in series with the other three pumps or the remaining pumps of the even number of pumps such that the pumping assembly (100) produces an amplification effect wherein the outlet pressure of one pump becomes the inlet pressure of another pump.

**8.** The pumping assembly as set forth in at least one of the previous claims wherein each of the even number of pumps (150) or each of the four pumps (150) has a single chamber and a single predetermined compression ratio, and, optionally, wherein the compression ratio of the pumping assembly (100) is the predetermined compression ratio of each pump raised to the fourth power.

**9.** The pumping assembly as set forth in at least one of the previous claims wherein each of the even number of pumps (150) or each of the four pumps (150) has two chambers and a single predetermined compression ratio for each chamber, and, optionally, wherein the compression ratio of the pumping assembly (100) is the predetermined compression ratio of each chamber raised to the eighth power.

## Patentansprüche

**1.** Pumpanordnung zur Verwendung mit einem an einer Reifenfelge montierten Luftreifen, um zu verhindern, dass der Luftreifen zu schwach aufgepumpt ist, wobei die Pumpanordnung (100) Folgendes umfasst:

eine gerade Anzahl von Pumpen (150), die an einer Reifenfelge angebracht sind;
eine Schwerkraftmasse (130);
einen Nocken (105), der an der Schwerkraftmasse (130) zum Erzeugen einer Pumpwirkung befestigt ist, wobei die Schwerkraftmasse (130) den Nocken (105) in einer festen Position relativ zu der Schwerkraftmasse (130)

hält und eine Drehung des Nockens (105) verzögert, wenn sich der Reifen dreht; und

Walzen (160) zum Ineingriffnehmen des Nockens (105) zum Erzeugen der Pumpwirkung, wenn sich die Reifenfelge dreht;

**dadurch gekennzeichnet, dass** die Pumpen (150) in Reihe geschaltet sind.

2. Pumpanordnung nach Anspruch 1, die ferner einen Auslass zum Lenken von Druckluft in einen Ventilschaft des Luftreifens beinhaltet.

3. Pumpanordnung nach Anspruch 2, die ferner einen Filter, der angrenzend an dem Auslass oder angrenzend an dem Ventilschaft angeordnet ist, beinhaltet.

4. Pumpanordnung nach wenigstens einem der vorhergehenden Ansprüche, die ferner ein einstellbares Drucksteuerventil zum Bestimmen des Luftdrucks, der in einen Reifenhohlraum des Luftreifens eintritt, beinhaltet.

5. Pumpanordnung nach wenigstens einem der vorhergehenden Ansprüche, wobei die Pumpanordnung (100) konfiguriert ist, um Druckluft in einen Reifenhohlraum des Luftreifens in beide Drehrichtungen der Reifenfelge zu pumpen.

6. Pumpanordnung nach wenigstens einem der vorhergehenden Ansprüche, wobei vier Pumpen (150) in 90-Grad-Schritten um die Reifenfelge herum montiert sind.

7. Pumpanordnung nach wenigstens einem der vorhergehenden Ansprüche, wobei jede von den vier Pumpen oder der geraden Anzahl von Pumpen mit den anderen drei Pumpen oder den verbleibenden Pumpen der geraden Anzahl von Pumpen derart in Reihe geschaltet ist, dass die Pumpanordnung (100) einen Verstärkungseffekt erzeugt, wobei der Auslassdruck einer Pumpe zu dem Einlassdruck einer anderen Pumpe wird.

8. Pumpanordnung nach wenigstens einem der vorhergehenden Ansprüche, wobei jede von der geraden Anzahl von Pumpen (150) oder jede von den vier Pumpen (150) eine einzelne Kammer und ein einzelnes zuvor bestimmtes Kompressionsverhältnis aufweist, und optional, wobei das Kompressionsverhältnis der Pumpanordnung (100) das zuvor bestimmte Kompressionsverhältnis jeder Pumpe, die auf die vierte Leistung angehoben wird, ist.

9. Pumpanordnung nach wenigstens einem der vorhergehenden Ansprüche, wobei jede von der geraden Anzahl von Pumpen (150) oder jede von den vier Pumpen (150) zwei Kammern und ein einzelnes zuvor bestimmtes Kompressionsverhältnis für jede Kammer aufweist, und optional, wobei das Kompressionsverhältnis der Pumpanordnung (100) das zuvor bestimmte Kompressionsverhältnis jeder Kammer, die auf die achte Leistung angehoben wird, ist.

## Revendications

1. Assemblage de pompage pourson utilisation avec un bandage pneumatique qui est monté sur une jante de bandage afin d'empêcher le bandage pneumatique de devenir trop peu gonflé, à l'assemblage de pompage (100) comprenant :

   un nombre pair de pompes (150) qui sont fixées à une jante de bandage ;

   un contrepoids (130) ;

   une came (105) qui est fixée au contrepoids (130) pour produire une action de pompage, le contrepoids (130) maintenant la came (105) dans une position fixe par rapport au contrepoids (130) et retardant la rotation de la came (105) lorsque le bandage est mis en rotation ; et

   des galets (160) qui sont destinés à entrer en contact avec la came (105) dans le but de procurer l'action de pompage lorsque la jante du bandage est mise en rotation ;

   **caractérisé en ce que** les pompes (150) sont montées en série.

2. Assemblage de pompage tel qu'indiqué dans la revendication 1, qui englobe en outre une sortie pour orienter de l'air mis sous pression jusque dans une tige de soupape du bandage pneumatique.

3. Assemblage de pompage tel qu'indiqué dans la revendication 2, qui englobe en outre un filtre qui est disposé en position adjacente à la sortie ou en position adjacente à la tige de soupape.

4. Assemblage de pompage tel qu'indiqué dans au moins une des revendications précédentes, qui englobe en outre une soupape de commande de la pression qui peut être réglée, qui est destinée à déterminer la pression de l'air

qui pénètre dans une cavité du bandage pneumatique.

5. Assemblage de pompage tel qu'indiqué dans au moins une des revendications précédentes, dans lequel l'assemblage de pompage (100) est configuré pour pomper de l'air mis sous pression dans une cavité du bandage pneumatique dans l'une ou l'autre direction de rotation de la jante du bandage.

6. Assemblage de pompage tel qu'indiqué dans au moins une des revendications précédentes, dans lequel quatre pompes (150) sont montés à rasion d'incréments de 90° autour de la jante du bandage.

7. Assemblage de pompage tel qu'indiqué dans au moins une des revendications précédentes, dans lequel chacune des quatre pompes ou le nombre pair de pompes est monté en série avec les trois autres pompes ou avec les pompes restantes du nombre pair de pompes, d'une manière telle que l'assemblage de pompage (100) produit un effet d'amplification ; dans lequel la pression de sortie d'une pompe devient la pression d'entrée d'une autre pompe.

8. Assemblage de pompage tel qu'indiqué dans au moins une des revendications précédentes, dans lequel chaque pompe parmi le nombre pair de pompes (150) ou chacune des quatre pompes (150) possède une chambre unique et un rapport de compression prédéterminé unique ; et, de manière facultative, dans lequel le rapport de compression de l'assemblage de pompage (100) représente le rapport de compression prédéterminé de chaque pompe élevé à la quatrième puissance.

9. Assemblage de pompage tel qu'indiqué dans au moins une des revendications précédentes, dans lequel chaque pompe parmi le nombre pair de pompes (150) ou chacune des quatre pompes (150) possède deux chambres et un seul rapport de compression prédéterminé pour chaque chambre ; et, de manière facultative, dans lequel le rapport de compression de l'assemblage de pompage (100) représente le rapport de compression prédéterminé de chaque chambre élevé à la huitième puissance.

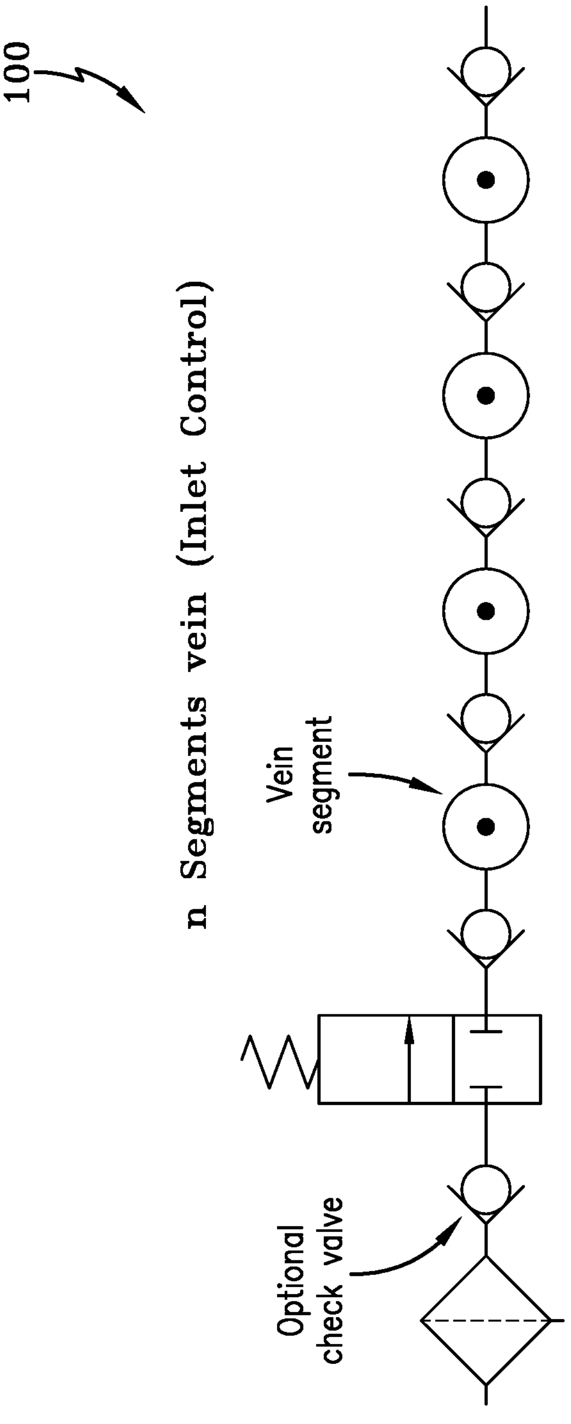
100
n Segments vein (Inlet Control)
Vein segment
Optional check valve

FIG.1

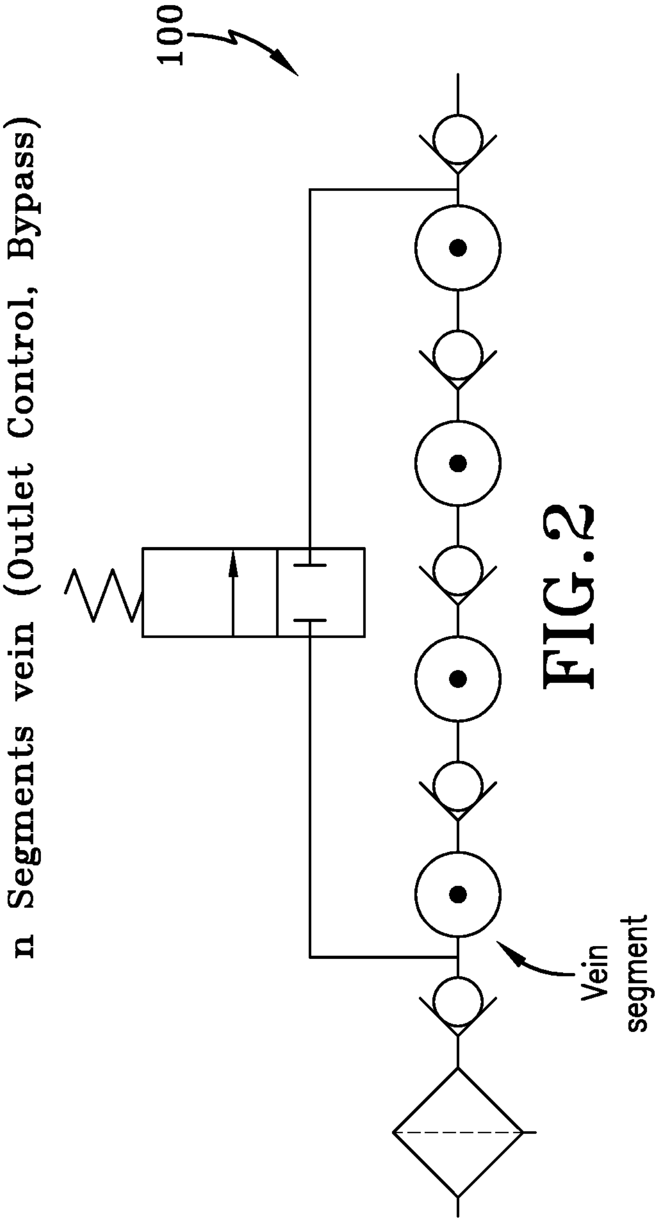
n Segments vein (Outlet Control, Bypass)
100
Vein segment

FIG.2

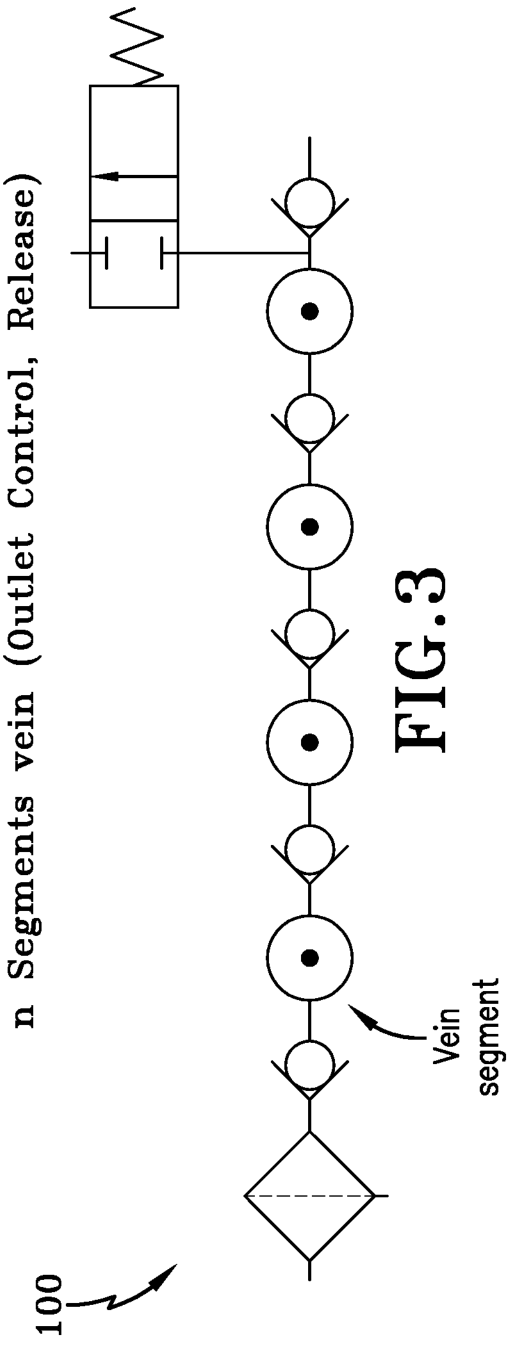
n Segments vein (Outlet Control, Release)
100
Vein segment

FIG.3

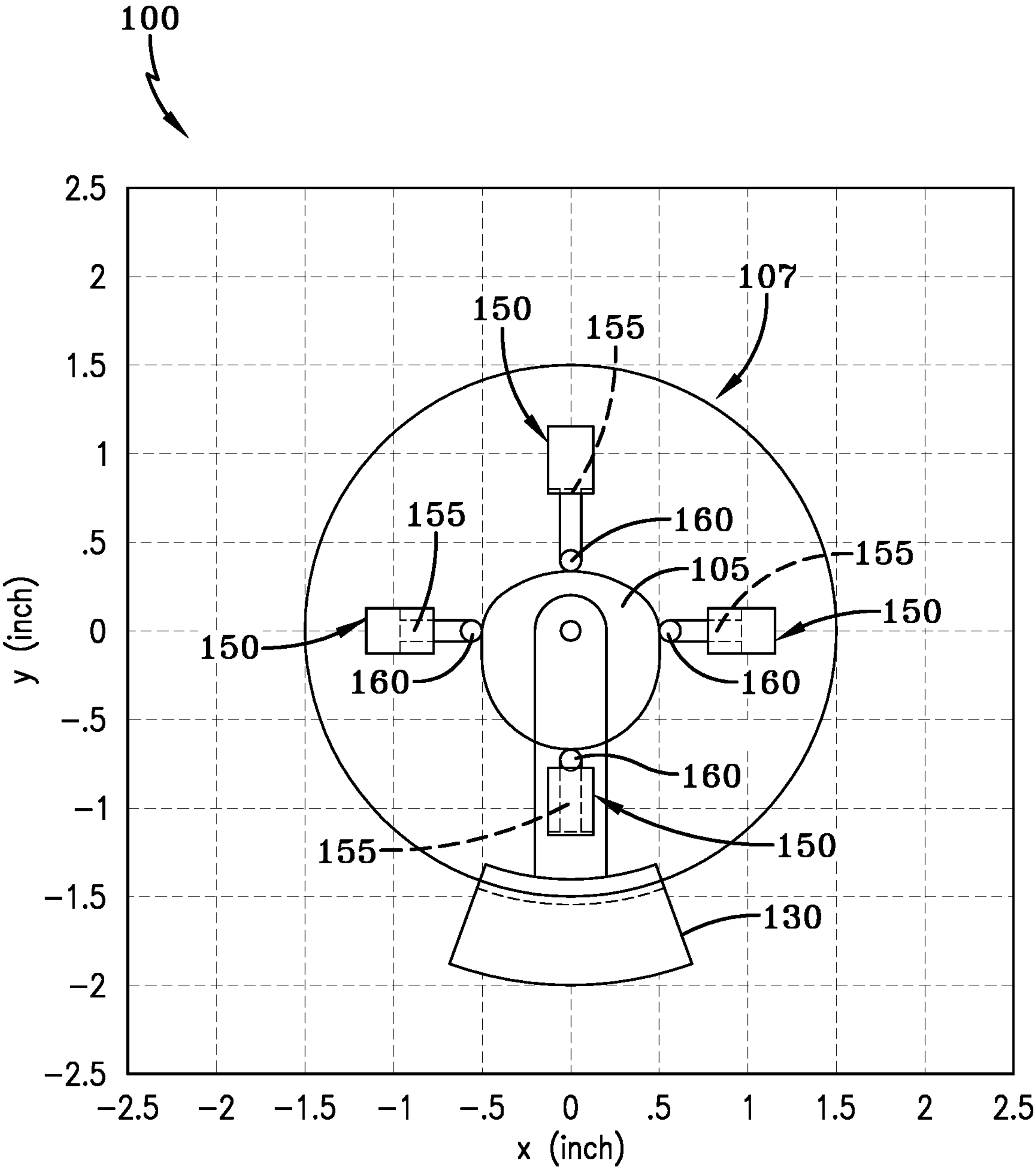
100
2.5
2
1.5
1
.5
0
−.5
−1
−1.5
−2
−2.5
y (inch)
−2.5 −2 −1.5 −1 −.5 0 .5 1 1.5 2 2.5
x (inch)
107
150
155
155
160
155
105
150
150
160
160
160
150
155
130

FIG.4

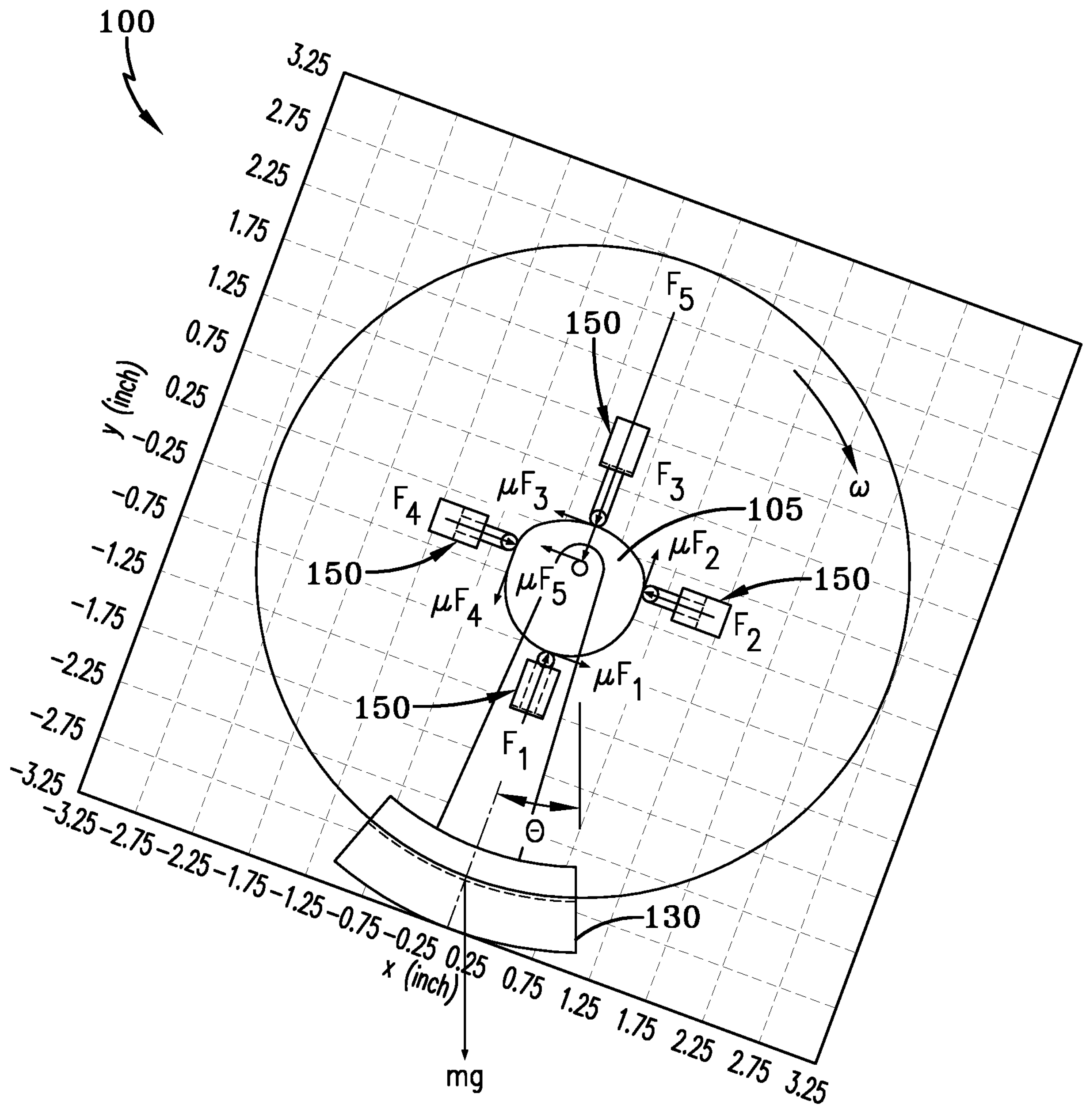
100
150
$F_5$
$F_3$
$\mu F_3$
$F_4$
105
$\mu F_2$
150
$F_2$
$\mu F_5$
$\mu F_4$
150
$\mu F_1$
150
$F_1$
Θ
130
mg
ω
y (inch)
3.25 2.75 2.25 1.75 1.25 0.75 0.25 −0.25 −0.75 −1.25 −1.75 −2.25 −2.75 −3.25
x (inch)
−3.25 −2.75 −2.25 −1.75 −1.25 −0.75 −0.25 0.25 0.75 1.25 1.75 2.25 2.75 3.25

FIG.5

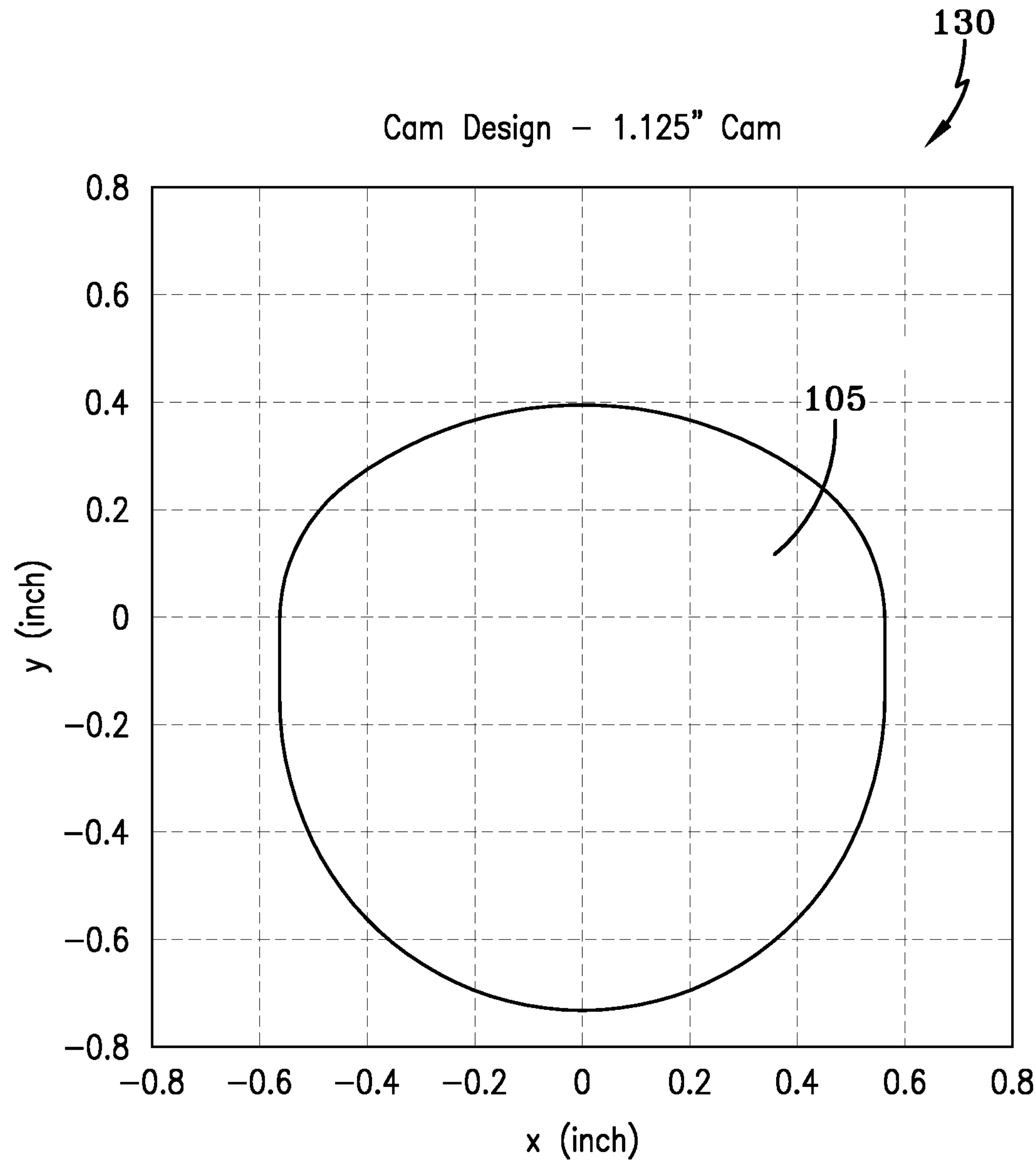
130
Cam Design – 1.125" Cam
105
0.8
0.6
0.4
0.2
0
−0.2
−0.4
−0.6
−0.8
y (inch)
−0.8
−0.6
−0.4
−0.2
0
0.2
0.4
0.6
0.8
x (inch)

FIG.6

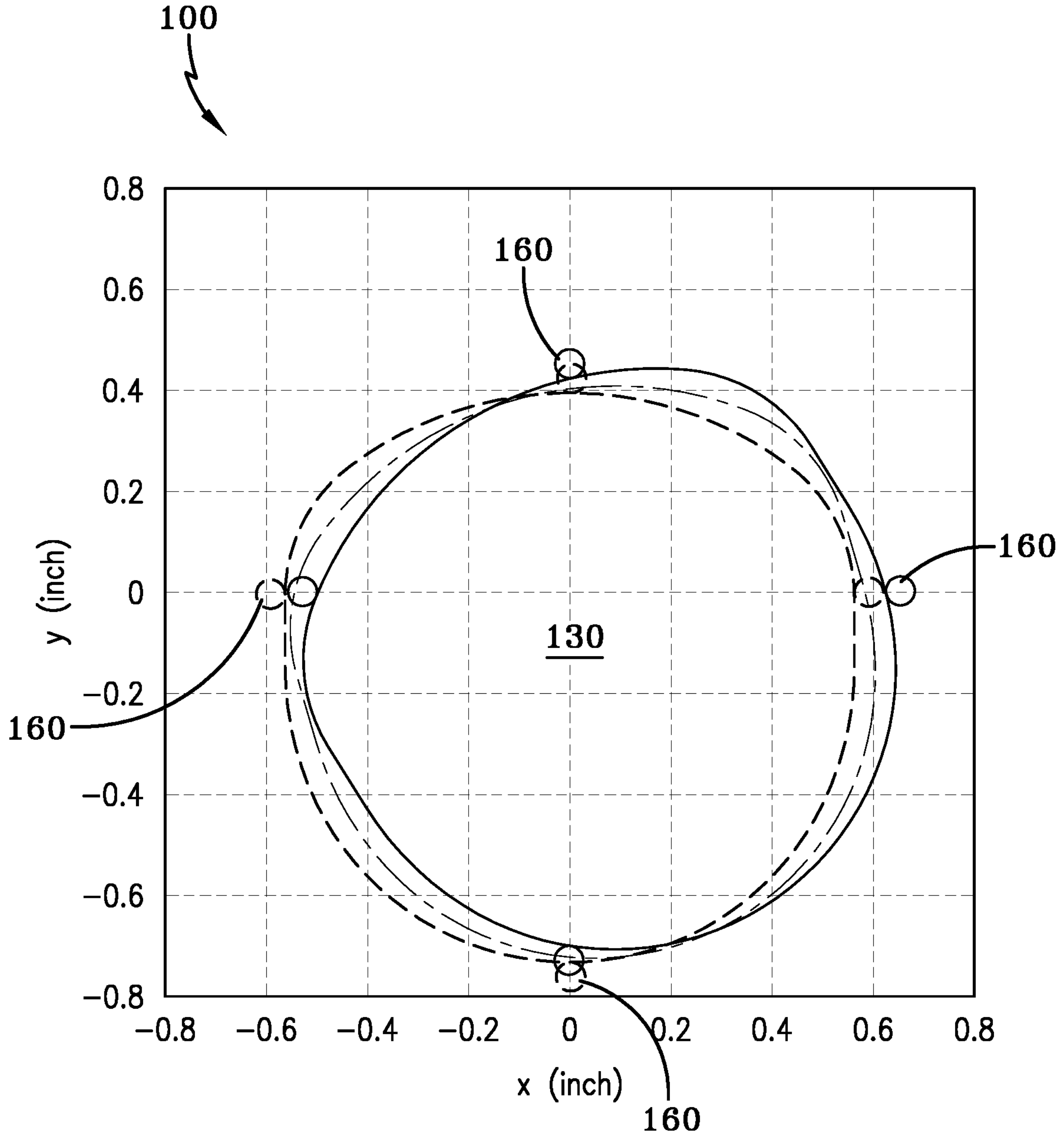
100
0.8
0.6
0.4
0.2
0
−0.2
−0.4
−0.6
−0.8
y (inch)
160
160
160
160
130
−0.8
−0.6
−0.4
−0.2
0
0.2
0.4
0.6
0.8
x (inch)

FIG.7

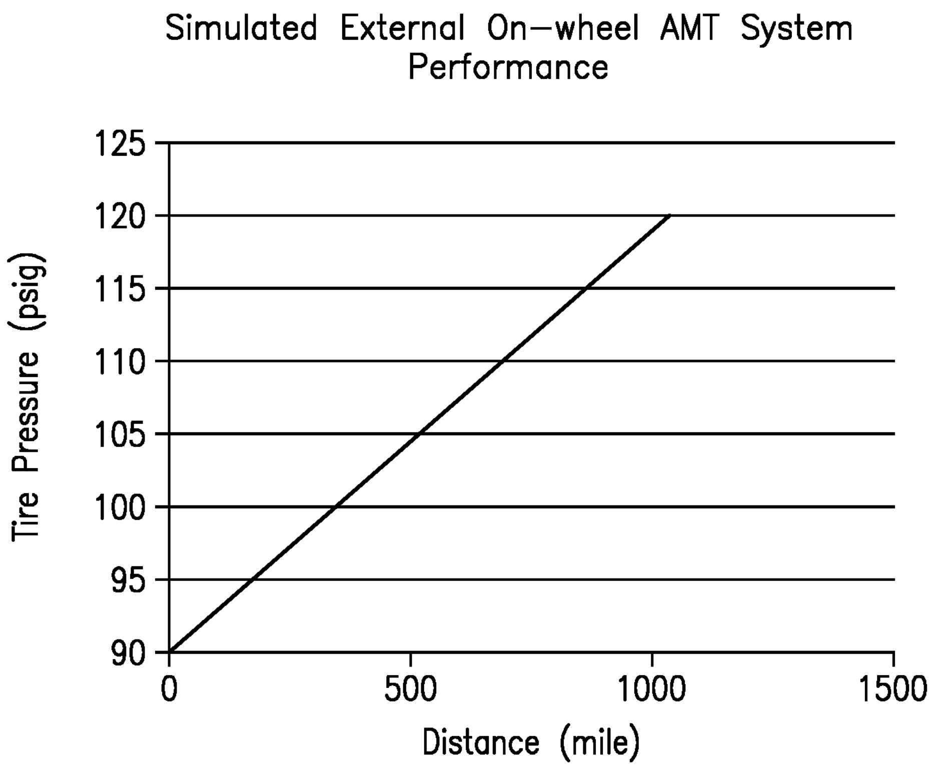
Simulated External On-wheel AMT System
Performance
Tire Pressure (psig)
125
120
115
110
105
100
95
90
0
500
1000
1500
Distance (mile)

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2317636 A
- US 2127152 A
- US 2623472 A
- US 8113254 B